# EUROPÄISCHE PATENTSCHRIFT

(11) **EP 1 064 331 B1**
(45) Veröffentlichungstag und Bekanntmachung des Hinweises auf die Patenterteilung: **22.10.2003**
(21) Anmeldenummer: 99911763.3
(22) Anmeldetag: 10.03.1999
(51) Int. Cl.: C09C 1/60, C09C 1/58

(54) **RUSSGRANULATE**
SOOT GRANULES
GRANULES DE SUIE

(30) Priorität: 18.03.1998 DE 19811553
(43) Veröffentlichungstag der Anmeldung: 03.01.2001
(73) Patentinhaber: Bayer Aktiengesellschaft, 51368 Leverkusen (DE)
(72) Erfinder: LINDE, Günter, D-47800 Krefeld (DE); HEMPELMANN, Uwe, D-40670 Meerbusch (DE); EITEL, Manfred, D-47906 Kempen (DE)
(86) Internationale Anmeldenummer: EP9901537
(87) Internationale Veröffentlichungsnummer: WO99047609

(56) Entgegenhaltungen:
- EP-A- 0 370 490
- EP-A- 0 802 241
- EP-A- 0 807 669
- EP-A- 0 857 764
- EP-A- 0 860 476

## Beschreibung

Diese Erfindung betrifft ein Verfahren zur Herstellung von kompaktierten Rußgranulaten für verschiedene Einsatzgebiete.

Es ist bekannt, daß färbende Materialien aufgrund ihrer geringen Teilchengröße von 0,01 µm bis 20 µm stark zum Stauben neigen und sich wegen der starken Haftkräfte der Partikel sehr schlecht dosieren lassen. Dem begegnet man dadurch, daß diese Pulver vor ihrer Verwendung granuliert werden. Allerdings geht dabei auch ein Teil der Dispergierbarkeit verloren, da die Granulate üblicherweise zur Verbesserung der Transporteigenschaften durch Bindemittel in ihrer Stabilität verstärkt werden. Dadurch bedingt weisen Granulate aus Pigmenten häufig eine geringere Anfangsfarbstärke auf, bei gegebener Dispergierzeit bleibt also die Farbstärkentwicklung vom Granulat hinter der Einfärbung mit Pulver zurück. Die erwünschten Vorteile der Staubfreiheit und der guten Dosierbarkeit haben daher zu vielen Bemühungen geführt, auch bei Pigmenten zu gut dispergierbaren Granulaten zu kommen.

Das gilt insbesondere auch für Ruße, die wegen ihrer geringen Teilchengröße und niedrigen Schüttdichte immer schon als Trockenpulver eine Verdichtung durch "Entgasen" zwischen Vakuumwalzen oder durch "Verperlung" in rotierenden Trommeln erfahren haben. Allerdings entstehen bei der Verdichtung zwischen Walzen keine Granulate und bei einer Trockenverpulverung agglomerieren die Rußflocken zu unterschiedlich großen Kügelchen bis zu einigen Millimetern Durchmesser. Bei der Naß-Verperlung werden die Ruße unter Verwendung von Wasser und eventuell Bindemitteln in Perlmaschinen aufgranuliert und danach getrocknet. Die Herstellung von Rußgranulaten wird beschrieben in Ullmanns "Enzyclopedia of Industrial Chemistry", Fifth Edition, Volume A 5 S. 148.

US-A 4 946 505 beschreibt die Herstellung von Ruß- und Pigment-Granulaten zur Beton-Einfärbung, die durch Sprühgranulation hergestellt werden. Nachteilig bei der Sprühgranulation ist, daß der Ruß mit Wasser angemaischt werden muß und wegen der Wasserverdampfung erhebliche Trocknungskosten entstehen. Preß- und Brikettierverfahren werden in US-A 4 946 505 explizit ausgeschlossen.

DE-A 4 336 548 und DE-A 4 345 168 beschreiben Rußgranulate, die unter Zusatz beträchtlicher Wassermengen über eine Ringmatrizenpresse, nachfolgende Rundung und Trocknung hergestellt werden. Dabei werden Granulate mit weniger als 1% Bindemittel erhalten.

EP-A 0 370 490 beschreibt Ruß-Schuppen für Druckfarben, die beim Kompaktieren von Ruß unter niedrigem Preßdruck entstehen. Das Material enthält zum Teil noch staubende Anteile. Es wird ausgeführt, daß bei hohem Preßdruck die Dispergierbarkeit leidet.

Aus der EP-A 0 802 241 sind Rußgranulate bekannt geworden, die eine relative Farbstärke bezogen auf das zugrundeliegende Pulver von maximal 100 % aufweisen.

Die bisher vorliegenden Verfahren liefern ein noch nicht zufriedenstellendes Material oder sind wegen der Nachtrocknung energetisch ungünstig.

Es lag also die Aufgabe vor, Rußgranulate zur Verfügung zu stellen, die mechanische Stabilität mit hoher Farbstärke verbinden sowie ein technisch einfaches, kostengünstiges Verfahren vorzustellen, das derart gut dispergierbare, transportstabile und staubarme Ruß-Granulate liefert.

Diese Aufgabe wird durch die erfindungsgemäßen Rußgranulate gelöst: Das Rußpulver wird unter Zusatz von Hilfsmitteln so stark kompaktiert und nachfolgend granuliert, daß der Quotient aus pyknometrischer Dichte und Schüttdichte zwischen 3,0 und 10, vorzugsweise zwischen 3,5 und 8, liegt. Die so erhaltenen Granulate weisen trotz Kompaktierung überraschenderweise eine höhere Farbstärke als die zugrundeliegenden Pulver auf.

Gegenstand der Erfindung ist daher auch ein Verfahren zur Herstellung von Rußgranulaten, in dem Ruße mit Hilfsmitteln zweifach oder mehrfach kompaktiert und zu Granulaten zerkleinert werden, wobei die Granulate in der Regel eine mittlere Teilchengröße von 0,3 bis 2 mm, vorzugsweise von 0,5 bis 1,0 mm, aufweisen. Der Quotient aus pyknometrischer Dichte und Schüttdichte des erhaltenen erfindungsgemäßen Granulats liegt zwischen 3,0 und 10, vorzugsweise zwischen 3,5 und 8.

In den Kompaktierschritten wurden vorzugsweise Preßkräfte zwischen 1 und 100 kN/cm, insbesondere bevorzugt zwischen 10 und 30 kN/cm angewendet. Die Preßkräfte können in allen Kompaktierschritten gleich hoch sein, sind aber vorzugsweise verschieden. Die mit diesen Verdichtungsaggregaten erzielbare Schülpendicke beträgt vorzugsweise 1 bis 5 mm, insbesondere 1 bis 3 mm. Als Verdichtungsaggregate eignen sich zum Kompaktieren auch beispielsweise Schnecken, Walzen, Stempelpressen, Strangpressen mit oder ohne Entlüftungsvorrichtungen..

Die nach den Kompaktierschritten erfolgende Granulation findet vorzugsweise als Siebgranulation statt. Dabei kann der Feinanteil unmittelbar durch Siebung abgetrennt und zurückgeführt werden.

Es kann auch vorteilhaft sein, den Feinanteil durch einen nachfolgenden Schritt, vorzugsweise durch z.B. Nachrollen auf einem Drehteller oder in einer Drehtrommel aufzugranulieren.

Die Zugabe von flüssigen Hilfsmitteln erhöht bei gegebenen Kompaktierbedingungen den Durchsatz und den Preßdruck so, daß die entstehenden Granulate fester werden.

Messungen der Teilchengrößenverteilung zeigen, daß unter Anwendung von höher werdenden Preßkräften offensichtlich die Strukturen der Ruße zerbrechen. Dementsprechend wird auch beobachtet, daß die erfindungsgemäß hergestellten Granulate eine höhere Farbstärke aufweisen als die entsprechenden Pulvermischungen. Die Anwendung höherer Drücke und/oder Mehrfachkompaktierung bringt höhere Granulat-Stabilität und erfindungsgemäß überraschenderweise gleichzeitig höhere Farbstärke.

Die Teilchengrößen der Granulate sind nicht erfindungswesentlich, sie betragen in der Regel von 0,3 bis 2 mm, bevorzugt von 0,5 bis 1,0 mm. Der Quotient aus pyknometrischer Dichte und Schüttdichte liegt zwischen 3,0 und 10, bevorzugt zwischen 3,5 und 8.

Als Hilfsstoff werden ein oder mehrere Bindemittel und/oder Dispergiermittel eingesetzt. Die Hilfsstoffe können fest oder flüssig sein. Vorzugsweise eingesetzt werden flüssige Bindemittel aus der Gruppe Polyole, Polyether, Polyester, Öle, Wasser und wäßrige Lösungen von polymeren Salze oder Melasse. Ebenfalls bevorzugt ist ein Dispergiermittel aus der Gruppe Ligninsulfonate und NaphthalinformaldehydKondensate.

Die Gesamtmenge der Hilfsmittel beträgt üblicherweise 0,1 Gew.-% bis 25 Gew.-%, vorzugsweise 1 bis 20 Gew.-% und besonders bevorzugt 3 bis 15 Gew.-%.

Die erhaltenen Granulate können anschließend zur Erhöhung der Stabilität in einem weiteren Schritt mit einer dünnen Schicht eines Materials aus der Gruppe der Wachse, Polyether, Polyester, Polyolefine und Polyvinylalkohole überzogen werden. Es können zusätzlich Konservierungs- und/oder Duftstoffe zugesetzt werden.

Nach dem erfindungsgemäßen Verfahren werden nicht nur gut fließfähige Granulate erhalten, sondern die relative Farbstärke in Beton ist höher als aufgrund der Menge des eingesetzten Ausgangsmaterials in Pulverform zu erwarten.

Daher eignen sich die erfindungsgemäßen Rußgranulate besonders zum Einfärben von Substraten, insbesondere von Beton, Asphalt, Kunststoffen sowie Farben und Lacken.

### Methode zur Überprüfung der Dispergierbarkeit von Granulaten in Baustoffen

Die Dispergierbarkeit in Zementmörtel (Farbstärke in Mörtelprismen) der jeweiligen Granulate wird im Vergleich zum Pulver-Standard bestimmt.

### Arbeitsgeräte:

Toni-Mischgerät mit Regelelektronik
Mischbehälter (Fa. Toni-Technik)
Farbmeßgerät (Minolta CR 310); Lichtart C; 0° diffus mit Glanz, 8 cm Beleuchtungsöffnung

### Mörtelrezeptur:

| | |
|---|---|
| 1200 g | Quarzsand 0,2 - 1 mm |
| 600 g | Quarzsand 1 - 2 mm |
| 200 g | Kalksteinmehl (5 Gew.-% Siebrückstand auf 90 µm-Sieb) |
| 500 g | Weißzement (Dyckerhoff) |
| 175 g | Wasser (WZ-Wert= 0,35) |
| 6 g | Pigment-Granulat |

### Durchführung:

Alle Mischkomponenten werden zunächst ohne Wasser in den Mischbehälter vorgelegt und trocken vorgemischt. Anschließend werden Wasser und danach Zement eingegeben und die Mischung 100 Sekunden gerührt.

Diese Mischung wird in eine Stahlpreßform eingebracht und mit ca. 300 bar verpreßt. Direkt nach dem Preßvorgang wird noch in der Form der feuchte Preßling durch Aufsetzen des Farbmeßgerätes farbmetrisch vermessen. Die Messung erfolgt an vier Stellen des Preßlings.

### Auswertung:

Die oben beschriebene Arbeitsweise wird sowohl an dem Granulat-Prüfling als auch an dem dazugehörigen Pulver-Standard als Bezug durchgeführt.

Die Bestimmung der relativen Farbstärke der Proben mit dem Farbstärkekriterium Y erfolgt nach DIN 55986/A.

Die Teilchengröße wurde an Granulaten mit Hilfe eines Malvern® Mastersizer S bestimmt.

### Messung der Teilchengröße mit dem Malvern Mastersizer S

Bei der Dispergierung der untersuchten Substanzen sind zwei verschiedene Verfahren eingesetzt worden, die sich in Bezug auf die Intensität des Dispergierprozesses unterscheiden. Eine hohe Dispergierenergie wird durch den Einsatz einer Ultraschallsonotrode mit 200 W Eingangsleistung erreicht. Verwendet wurde eine Ultraschallsonotrode der Firma B. Braun Diessel Biotec vom Typ ®Labsonic U. In Mischung mit der angegebenen Menge Dispergier- und Zusatzstoffe werden 500 mg des Materials pro 50 ml destilliertem Wasser 2 Minuten mit der Ultraschallsonotrode dispergiert. Verwendet wird eine Einstellung mit 200 W Eingangsleistung, wobei der Impulsregler der Sonotrode auf 0,5 gestellt wird. Man benutzt Gefäße in Becherform mit einem Durchmesser von ca. 45 mm und einer Höhe von 55 mm. Die Sonotrode taucht ca. 2 cm in die Suspension ein, wobei auf möglichst gleichmäßigen Abstand von den Wänden des Gefäßes geachtet wird. Die Suspension wird vollständig in die Meßkammer des Gerätes gegeben und während der Messung mit jeweils 50 % der maximalen Leistung gerührt und gepumpt. Eine Alternative, um geringe Dispergier-Energien zu realisieren, ist die Verwendung der internen Ultraschallkammer des Meßgerätes. Hier werden 50 mg der Untersuchungssubstanz gegebenenfalls auch zusammen mit den angegebenen Zusatzstoffen in die mit destillierten Wasser gefüllte Ultraschallkammer des Gerätes gegeben. Die Intensität der Ultraschalleistung wird auf 70 % eingestellt; die Dispergierdauer beträgt 2 Minuten; die übrigen Einstellungen gelten unverändert. Angegeben werden der Mittelwert der Volumenverteilung (D[4,3]) und/oder die Perzentilwerte der Volumenverteilung bei 10, 50 und 90 % (D[v,0.1], D[v,0.5] und D[v,0.9]).

### Siebanalyse mit Luftstrahlsiebmaschine

- Arbeitsgeräte:: 250 µm DIN-VA-Sieb (DIN-ISO 3310)
Luftstrahlsiebmaschine; Rhewum Typ LPS 200 MC
(4 mm Düse, 18 UpM, 35 m³/h Luft, Siebzeit 1 Minute)
- Durchführung:: 20 g der zu analysierenden Probe werden auf das Sieb gegeben und anschließend mit der Siebmaschine abgesiebt.
Nach Beendigung des Siebens wird die Masse des Überkorns bestimmt und der prozentuale Anteil gegen Einwaage bestimmt.
- Auslaufverhalten:: Das Auslaufverhalten wird gemäß DIN 53 211 bestimmt mit einem Auslaufbecher (100 ml Volumen, 6 mm Auslaufdüse).

Nachfolgend wird die Erfindung mit Beispielen beschrieben, die keine Einschränkung bedeuten.

### Versuchsreihe 1

®Flammruß 101 (Handelsprodukt der Degussa) wurde in einem Pflugscharmischer (Fa. Lödige, Paderbom) intensiv mit unterschiedlichen Mengen an Polyethylenglykol ®PEG 400 (Handelsprodukt der Firma EC-Dormagen) und Ammonium-Ligninsulfonat (Handelsprodukt der Firma Lignotec, Düsseldorf) gemischt.

Diese Mischungen wurden in bis zu 3 Kompaktiervorgängen verdichtet oder auch über eine Vakuumpresse entgast und in einem Schritt kompaktiert mit einem Aggregat Typ CS25 der Firma Bepex, Leingarten.

Das Material wurde über einen Schroter der Firma Frewitt Typ MGI 314 mit einem Sieb von 1,5 mm Maschenweite geschrotet und über ein Sieb mit 323 µm Maschenweite Typ ®Conflux der Firma Siebtechnik, Mühlheim, vom Feinanteil abgetrennt. Die Versuchsbedingungen und die Ergebnisse sind in der nachfolgenden Tabelle 1 zusammengestellt. Es wurden fließfähige, nicht staubende Granulate von unregelmäßiger Form mit einer erhöhten relativen Farbstärke erhalten.

### Versuchsreihe 2

Es wurden Mischungen von einem Flammruß 101 wie in Versuchsreihe 1 mit unterschiedlichen Anwendungsmengen von Hilfsmitteln hergestellt, über eine Vakuumpresse entgast und über den Kompaktor CS 25 und eine Vorverdichterschnecke mit stärker konischem Anteil verdichtet. Die Versuchsbedingungen und die Ergebnisse sind in Tabelle 2 zusammengestellt. Bei Verwendung von Hilfsmitteln wurden stabile Granulate mit verbesserter relativer Farbstärke erhalten.

Mit zunehmender Menge an Hilfsmitteln nehmen nach dem Preßvorgang sowohl die sich einstellende Preßkraft als auch Schüttdichte, Ausbeute, Stabilität und relative Farbstärke zu (Tabelle 2).

### Vergleichsversuche

Bei sehr niedrigen Preßkräften bzw. ohne Hilfsmittel bleiben die Schüttdichten niedrig wobei die Ausbeute und die relative Farbstärke niedriger sind (Tabelle 2).

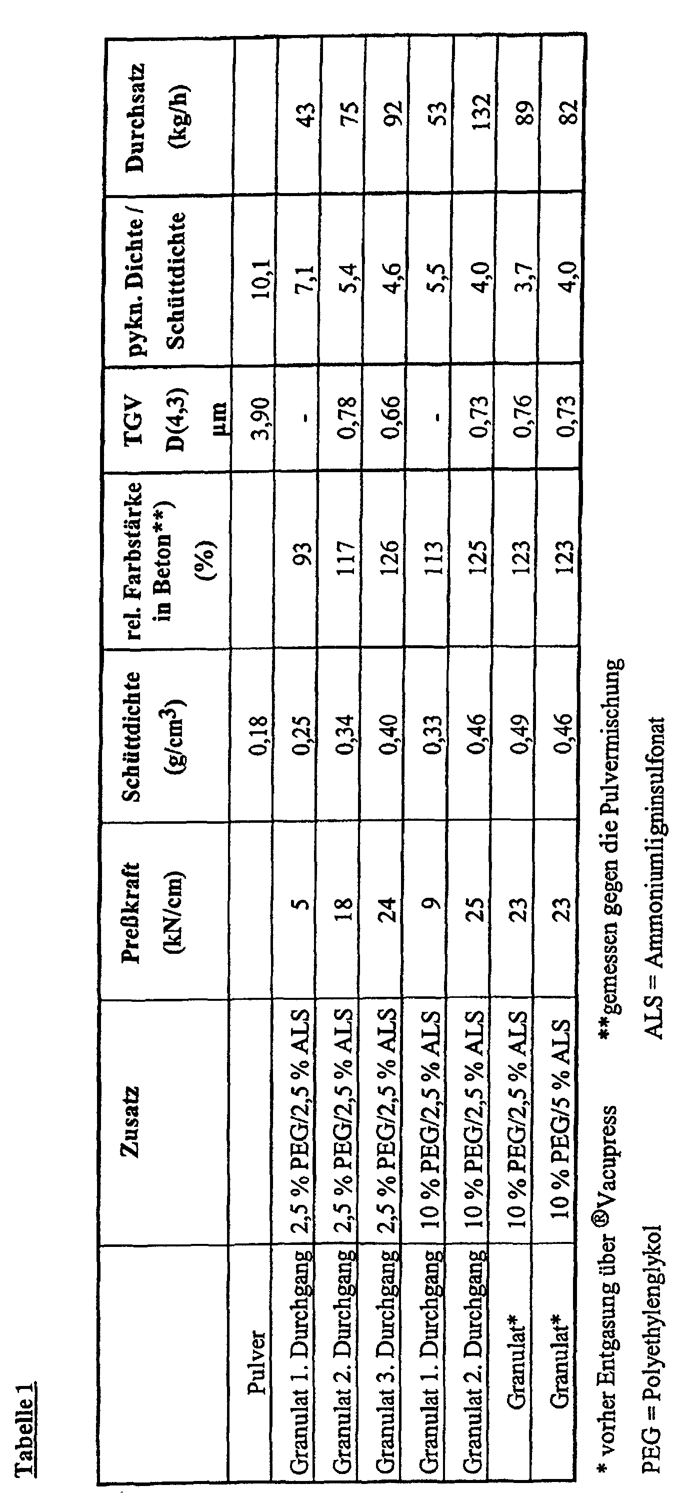

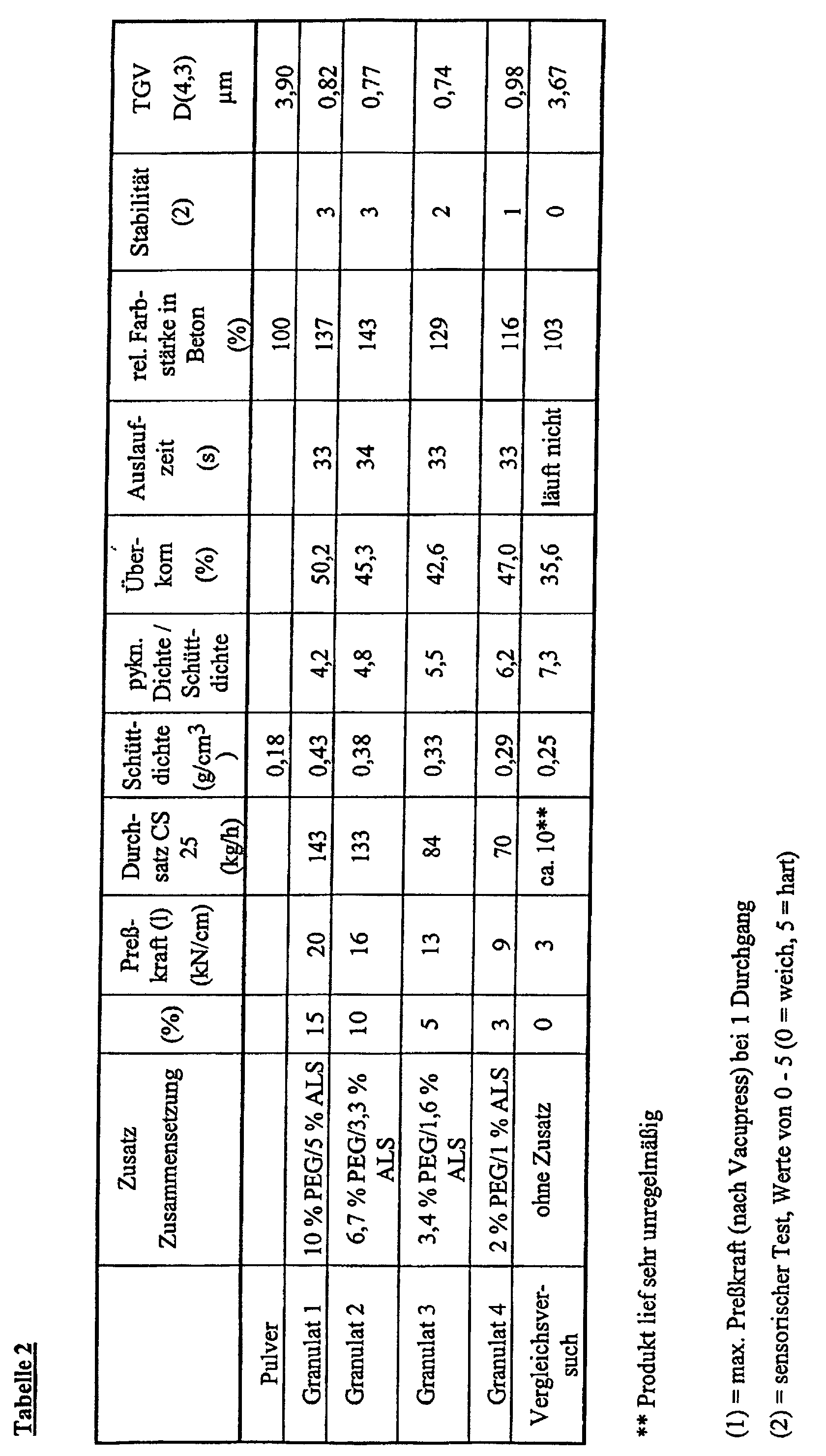

## Patentansprüche

1. Verfahren zur Herstellung von Rußgranulaten, in dem Ruße in Gegenwart von Hilfsmitteln kompaktiert und zu Granulaten zerkleinert werden, wobei die Granulate eine mittlere Teilchengröße von 0,3 bis 2 mm, vorzugsweise von 0,5 bis 1,0 mm, aufweisen, **dadurch gekennzeichnet, daß** die Kompaktierung zweifach oder mehrfach durchgeführt wird und der Quotient aus pyknometrischer Dichte und Schüttdichte zwischen 3,0 und 10, vorzugsweise zwischen 3,5 und 8 , liegt.

2. Verfahren nach Anspruch 1, **dadurch gekennzeichnet, daß** als Hilfsmittel ein oder mehrere Bindemittel und/oder Dispergiermittel in einer Gesamtmenge von 0,1 bis 25 Gew.-%, vorzugsweise 1 bis 20 Gew.-%, insbesondere von 3 bis 15 Gew.-% eingesetzt werden.

3. Verfahren nach Ansprüchen 1 bis 2, **dadurch gekennzeichnet, daß** ein flüssiges Bindemittel aus der Gruppe Polyole, Polyether, Polyester, Öle, Wasser und wäßrige Lösungen von polymeren Salzen oder Melasse eingesetzt wird.

4. Verfahren nach Ansprüchen 1 bis 3, **dadurch gekennzeichnet, daß** ein Dispergiermittel aus der Gruppe Ligninsulfonate und NaphthalinformaldehydKondensate eingesetzt wird.

5. Verfahren nach Ansprüchen 1 bis 4, **dadurch gekennzeichnet, daß** Preßkräfte zwischen 1 und 100 kN/cm, vorzugsweise zwischen 5 und 50 kN/cm, insbesondere zwischen 10 und 30 kN/cm angewendet werden.

6. Verfahren nach Ansprüchen 1 bis 5, **dadurch gekennzeichnet, daß** Verdichtungsaggregate in Form von Schnecken, Walzen, Stempelpressen oder Strangpressen eingesetzt werden.

7. Verfahren nach Ansprüchen 1 bis 6, **dadurch gekennzeichnet, dass** die Kompaktierung in mehreren Kompaktierschritten bei jeweils unterschiedlichen Presskräften erfolgt.

8. Verfahren nach Anspruch 7, **dadurch gekennzeichnet, dass** es sich um zwei Kompaktierschritte handelt.

9. Verfahren nach Ansprüchen 1 bis 8, **dadurch gekennzeichnet, dass** als Folgeschritt eine Siebung durchgeführt wird.

10. Verfahren nach Ansprüchen 1 bis 9, **dadurch gekennzeichnet, dass** die abgetrennte Siebfraktionen aufgranuliert wird.

11. Verfahren nach Ansprüchen 1 bis 10, **dadurch gekennzeichnet, dass** die erhaltenen Granulate mit einer dünnen Schicht eines Materials aus der Gruppe Wachse, Polyether, Polyolefine und Polyvinylalkohole überzogen werden.

12. Verfahren nach Ansprüchen 1 bis 11, **dadurch gekennzeichnet, dass** zusätzlich Konservierungsstoffe und/oder Duftstoffe zugesetzt werden.

13. Kompaktierte Rußgranulate mit einer relativen Farbstärke, bezogen auf das zugrundeliegende Pulver, von größer 100 % gemessen nach DIN 55986/A.

14. Rußgranulate gemäß Anspruch 13, **dadurch gekennzeichnet, dass** sie eine mittlere Teilchengröße von 0,3 bis 2 mm, vorzugsweise von 0,5 bis 1,0 mm, aufweisen, und dass der Quotient aus Dichte und Schüttdichte zwischen 3,0 und 10 mm, vorzugsweise zwischen 3,5 und 8 mm, liegt.

15. Rußgranulate gemäß Ansprüchen 13 und 14, **dadurch gekennzeichnet, dass** sie durch zweifach oder mehrfach durchgeführte Kompaktierung erhalten werden.

16. Rußgranulate gemäß Ansprüchen 14 bis 15, **dadurch gekennzeichnet, daß** sie als Hilfsmittel ein oder mehrere Bindemittel und/oder Dispergiermittel in einer Gesamtmenge von 0,1 bis 25 Gew.-%, vorzugsweise 1 bis 20 Gew.-%, insbesondere von 3 bis 15 Gew.-% enthalten.

17. Rußgranulate gemäß Anspruch 16, **dadurch gekennzeichnet, daß** es sich bei dem oder den Bindemittel(n) um flüssige Substanzen aus der Gruppe Polyole, Polyether, Polyester, Öle, Wasser und wäßrige Lösungen von polymeren Salzen oder Melasse handelt.

18. Rußgranulate gemäß Anspruch 17, **dadurch gekennzeichnet, daß** es sich bei dem Dispergiermittel um einen Stoff aus der Gruppe Ligninsulfonate und Naphthalinformaldehyd-Kondensate handelt.

## Claims

1. A process for the production of carbon black pellets, in which carbon blacks are compacted with auxiliary substances and comminuted to yield pellets, wherein the pellets have an average particle size of 0.3 to 2 mm, preferably of 0.5 to 1.0 mm, **characterised in that** compaction is performed twice or more and the quotient of pycnometric density and bulk density is between 3.0 and 10, preferably between 3.5 and 8.

2. A process according to claim 1, **characterised in that** one or more binders and/or dispersants are used as auxiliary substances in a total quantity of 0.1 to 25 wt.%, preferably of 1 to 20 wt.%, in particular of 3 to 15 wt.%.

3. A process according to claims 1 to 2, **characterised in that** a liquid binder is used from the group comprising polyols, polyethers, polyesters, oils, water and aqueous solutions of polymeric salts or molasses.

4. A process according to claims 1 to 3, **characterised in that** a dispersant is used from the group comprising lignin sulfonates and naphthalene/formaldehyde condensation products.

5. A process according to claims 1 to 4, **characterised in that** compressive forces of between 1 and 100 kN/cm, preferably of between 5 and 50 kN/cm, in particular of between 10 and 30 kN/cm are used.

6. A process according to claims 1 to 5, **characterised in that** compaction units in the form of screws, rollers, die presses or extruders are used.

7. A process according to claims 1 to 6, **characterised in that** compaction is performed in two or more compaction stages at differing compressive forces.

8. A process according to claim 7, **characterised in that** there are two compaction stages.

9. A process according to claims 1 to 8, **characterised in that** screening is performed as a subsequent stage.

10. A process according to claims 1 to 9, **characterised in that** the separated screen fractions are pelletised.

11. A process according to claims 1 to 10, **characterised in that** the resultant pellets are coated with a thin layer of a material from the group comprising waxes, polyethers, polyolefins and polyvinyl alcohols.

12. A process according to claims 1 to 11, **characterised in that** preservatives and/or fragrances are additionally added.

13. Compacted carbon black pellets with a relative colour intensity, relative to the powder on which they are based, of greater than 100% measured to DIN 55986/A.

14. Carbon black pellets according to claim 13, **characterised in that** they exhibit an average particle size of 0.3 to 2 mm, preferably of 0.5 to 1.0 mm, and that the quotient of density and bulk density is between 3.0 and 10, preferably between 3.5 and 8.

15. Carbon black pellets according to claims 13 and 14, **characterised in that** they have been obtained by compaction performed twice or more.

16. Carbon black pellets according to claims 14 to 15, **characterised in that** they contain one or more binders and/or dispersants as auxiliary substances in a total quantity of 0.1 to 25 wt.%, preferably of 1 to 20 wt.%, in particular of 3 to 15 wt.%.

17. Carbon black pellets according to claim 16, **characterised in that** the binder(s) used are liquid substances from the group comprising polyols, polyethers, polyesters, oils, water and aqueous solutions of polymeric salts or molasses.

18. Carbon black pellets according to claim 17, **characterised in that** the dispersant is a substance from the group comprising lignin sulfonates and naphthalene/formaldehyde condensation products.

## Revendications

1. Procédé pour la préparation de granulés de noir de carbone dans lequel on compacte le noir de carbone en présence de produits auxiliaires et le fragmente en granulés, les granulés ayant une dimension de particule moyenne de 0,3 à 2 mm, de préférence de 0,5 à 1,0 mm, ce procédé **se caractérisant en ce que** le compactage est réalisé deux fois ou plus et **en ce que** le quotient de la densité pycnométrique et de la densité apparente se situe entre 3,0 et 10, de préférence entre 3,5 et 8.

2. Procédé selon la revendication 1, **caractérisé en ce que** l'on utilise en tant que produits auxiliaires un ou plusieurs liants et/ou agents dispersants en quantité totale de 0,1 à 25 % en poids, de préférence de 1 à 20 % en poids et plus spécialement de 3 à 15 % en poids

3. Procédé selon les revendications 1 à 2, **caractérisé en ce que** l'on utilise un liant liquide du groupe des polyols, des polyéthers, des polyesters, des huiles, de l'eau et des solutions aqueuses de sels polymères ou de la mélasse.

4. Procédé selon les revendication 1 à 3, **caractérisé en ce que** l'on utilise un agent dispersant du groupe des lignine-sulfonates et des condensats naphtalène-formaldéhyde.

5. Procédé selon les revendications 1 à 4, **caractérisé en ce que** l'on applique des forces de compression de 1 à 100 kN/cm, de préférence de 5 à 50 kN/cm et plus spécialement de 10 à 30 kN/cm.

6. Procédé selon les revendications 1 à 5, **caractérisé en ce que** l'on utilise des appareils de compactage sous la forme de vis, de cylindres, de presses à poinçon ou de boudineuses.

7. Procédé selon les revendications 1 à 6, **caractérisé en ce que** l'on pratique plusieurs opérations de compactage à des forces de compression différentes dans chaque cas.

8. Procédé selon la revendication 7, **caractérisé en ce que** l'on pratique deux opérations de compactage.

9. Procédé selon les revendications 1 à 8, **caractérisé en ce que** le compactage est suivi d'un tamisage.

10. Procédé selon les revendications 1 à 9, **caractérisé en ce que** l'on met les fractions séparées au tamisage elles-mêmes à l'état de granulés.

11. Procédé selon les revendications 1 à 10, **caractérisé en ce que** les granulés obtenus sont revêtus d'une couche mince d'une matière du groupe des cires, des polyéthers, des polyoléfines et des alcools polyvinyliques.

12. Procédé selon les revendications 1 à 11, **caractérisé en ce que** l'on ajoute en outre des conservateurs et/ou des parfums.

13. Granulés de noir de carbone compactés à une puissance de coloration relative, mesurée selon norme allemande DIN 55986/A, supérieure à 100 % par rapport à celle de la poudre qui a servi à les préparer.

14. Granulés de noir de carbone selon la revendication 13, **caractérisés en ce qu'**ils ont une dimension de particule moyenne de 0,3 à 2 mm, de préférence de 0,5 à 1,0 mm et **en ce que** le quotient de la densité réelle et de la densité apparente se situe entre 3 et 10, de préférence entre 3,5 et 8.

15. Granulés de noir de carbone selon les revendications 13 et 14, **caractérisés en ce qu'**ils ont été obtenus par un compactage répété deux fois ou plus.

16. Granulés de noir de carbone selon les revendications 14 à 15, **caractérisés en ce qu'**ils contiennent en tant que produits auxiliaires un ou plusieurs liants et/ou agents dispersants en quantité totale de 0,1 à 25 %, de préférence de 1 à 20 % et plus spécialement de 3 à 15 % en poids.

17. Granulés de noir de carbone selon la revendication 16, **caractérisés en ce que** le ou les liants consistent en substances liquides du groupe des polyols, des polyéthers, des polyesters, des huiles, de l'eau et des solutions aqueuses de sels polymères ou de la mélasse.

18. Granulés de noir de carbone selon la revendication 17, **caractérisés en ce que** l'agent dispersant est une substance du groupe des lignine-sulfonates et des condensats naphtalène-formaldéhyde.
